# EUROPEAN PATENT SPECIFICATION

(11) **EP 2 004 698 B1**
(45) Date of publication and mention of the grant of the patent: **01.07.2009**
(21) Application number: 07702327.3
(22) Date of filing: 28.02.2007
(51) Int. Cl.: C08B 15/04

(54) **PREPARATION METHOD OF BIORESORBABLE OXIDIZED CELLULOSE WITH NITROGEN TETRAOXIDE IN PERFLUORO(POLY)ETHER**
VERFAHREN ZUR HERSTELLUNG VON BIORESORBIERBARER OXIDIERTER CELLULOSE MIT STICKSTOFFTETRAOXID IN PERFLUOR(POLY)ETHER
MÉTHODE D'ÉLABORATION DE CELLULOSE OXYDÉE BIORÉSORBABLE À L'AIDE DE TÉTRAOXYDE D'AZOTE DANS LE(POLY)ÉTHER PERFLUORÉ

(30) Priority: 10.03.2006 CZ 20060161
(43) Date of publication of application: 24.12.2008
(73) Proprietor: Synthesia, a.s., 532 17 Pardubice (CZ)
(72) Inventor: HAVELKA, Pavel, 533 41 Lazne Bohdanec (CZ); SOPUCH, Tomas, 530 02 Pardubice (CZ); VISEK, Lubos, 530 03 Pardubice (CZ); STEPAN, Jaroslav, Medlesice 183 (CZ); VANERKOVA, Dana, Sonov u Nového Mesta nad Metuji (CZ); MILICHOVSKY, Miloslav, 530 09 Pardubice (CZ)
(74) Representative: PATENTSERVIS Praha, a.s.
(86) International application number: PCT/CZ2007/000013
(87) International publication number: WO 2007/104267

(56) References cited:
- EP-A1- 1 400 624
- WO-A2-20/06017729
- US-A- 5 180 398
- US-A- 5 914 003

## Description

The invention refers to the method of preparation of bioresorbable material from oxidized natural or regenerated cellulose, which is intended particularly for health care purposes.

Oxidized cellulose is a product of oxidation and degradation of cellulose resulting from the oxidation of natural or regenerated cellulose, such as viscose. Oxidized cellulose is a biocompatible, bioresorbable and biodegradable material. In the acidic form it has bactericidal effects. It is commonly used in health care as a topical absorbable material.

Cellulose can be oxidized in a variety of ways. For instance, it is possible to oxidize cellulose by treatment with nitrogen oxides in polar acid medium, in non-polar organic solvents, using free nitroxyl radicals - so-called TEMPO oxidation, dissolved in 85-% phosphoric acid by treatment with solid sodium nitrite, periodic acid, sodium hypochlorite solution at elevated temperature and alkaline pH, sodium hypobromite solution, chromic acid, chlorous acid, hydrogen peroxide, oxygen in gaseous phase or nitrogen oxides in gaseous phase. Various oxidants have different reaction mechanisms and lead to different products, either technical or medicinal.

The first industrial-scale cellulose oxidation technology was based on oxidizing by gaseous dinitrogen tetraoxide (US 2 232 990). As an alternative, the oxidation by dinitrogen tetraoxide solution in tetrachloromethane had been considered; however, it was not realized at that time. Thus, the development of cellulose oxidation technology using dinitrogen tetraoxide in organic solvents began.

The first patent, which refers to the oxidation in organic solvents (US 2 448 892), indicates the following suitable solvents, besides to tetrachloromethane: ethylene dichloride, propylene dichloride, hexachloroethane, tetrachlorethane and chlorobenzene. Patent US 3 364 200 describes the oxidation technology using dinitrogen tetraoxide solution in chlorofluorocarbons (1,1,2-trichloro-1,2,2-trifluoroethane or trichlorofluoromethane). The advantage of this technology is a more precise reaction control and improved oxidation uniformity.

US 4 347 057 describes the preparation of bioresorbable surgical threads. Cotton threads are immersed into the oxidation mixture for 10 to 30 minutes, then taken out and let to react at elevated temperature and pressure for 15 to 90 minutes. Tetrachloromethane, trichlorofluoromethane, 1,1,2-trichloro-1,2,2-trifluoroethane and 1,2-dichloro-1,1,2,2-tetrafluoroethane, which is also one of chlorofluorocarbons, are given here as solvents.

The method of oxidation of polysaccharides in tetrachloromethane using a mixture of oxygen, inert gas and dinitrogen tetraoxide under raised pressure and temperature is described in patent US 5 541 316.

A common disadvantage of the methods above is the use of chlorinated and chlorofluorinated hydrocarbons as environmentally unacceptable solvents.

Consequently, the oxidation procedure in perfluorinated hydrocarbons (US 5 180 398) - perfluorocarbons, which serve as substitutes for chlorofluorocarbons and which are not ozone-depleting substances, was patented. EP 1 400 624 describes the cellulose oxidation procedure in perfluorocarbons utilizing the degreasing effects of the solvent to remove knitting oil. American patent US 5 914 003 describes the cellulose oxidation procedure in hydrofluoroethers.

A number of other organic solvents were tested for suitability for the oxidation in dinitrogen tetraoxide solution: The best results were achieved with cyclohexane, pentane and other alkanes. Polar solvents containing halogen or oxygen proved to be inconvenient. Ethers (ethyl ether, butyl ether, amyl ether and 1,4-dioxane) proved to be the absolutely worst solvents in which no oxidation occurred at all. An explanation is sought in the mutual interaction of the solvent with dinitrogen tetraoxide and in the solvent interaction with cellulose. The higher the dipolar moment of inert solvent, the lower amount of monomer (dinitrogen tetraoxide) and the degree of cellulose oxidation, as only the monomer acts oxidatively. For safety reasons, oxidation mixtures of strong oxidizing agent, such as dinitrogen tetraoxide, and flammable solvents, such as hydrocarbons and ethers, are very dangerous and virtually unusable for the technology.

This knowledge was further extended by the fact that cellulose cannot be oxidized in ethereal solvents, such as diphenyl ether or methyl tert-butyl ether due to binding of nitrogen dioxide dimer to solvent molecules and solvation of reaction centres in cellulose.

It is clear that the selection of solvents suitable for the oxidation of cellulose and polysaccharides is very limited in respect to their usability and safety concerns.

### Disclosure of the Invention

The mentioned disadvantages are eliminated by the method of preparation of bioresorbable cellulose material containing 5 to 24 wt-% of carboxylic groups, with the degree of polymerisation between 3 and 100 using the oxidation of natural or regenerated cellulose by dinitrogen tetraoxide in organic solvent medium, subsequent washing and drying according to this invention, the principle of which consists in the fact that at least one perfluoroether and/or at least one perfluoropolyether of the general formula I are used as the organic solvent

R₁-(O-R₂)ₘ-(O-R₃)ₙ-O-R₄ I,

where R₁, R₂, R₃, R₄ represent monomers from the family of linear or branched perfluoroalkyls or perfluoroaryls, and
m, n ≥ 0,
with the boiling point of solvent between 50 and 110 °C, while the perfluoropolyether may be a homopolymer or a copolymer of two or more monomers mentioned and the main perfluoropolyether skeleton may be either linear or branched.

The cellulose feedstock may be pure native (cotton, linters, wood cellulose, microbial cellulose - e.g. prepared by a biotechnological process, such as Acetobacter xylinum), regenerated cellulose (viscose or rayon prepared by the conventional viscose process, lyocell regenerated from N-methyl morpholine N-oxide (NMMO), regenerated cellulose, or microcrystalline partially degraded cellulose. The physical form of cellulose may be arbitrary, e.g. fabric (woven, knitted, nonwoven, nanofabric), wool, linters, staple, nanofibres and nanostructures, powder form, tampon, paper, board, sponge or film. This technology can be used for the oxidation of oligosaccharides and other polysaccharides, such as starch or fructans.

As the organic solvent, commercially available mixtures of a variety of perfluoro(poly)ethers with the boiling point of 50 to 110 °C can also be used, they may have more favourable price but their function is preserved.

Compared to the oxidation process in polar acid medium, the procedure of this invention yields a product with lower tendency to ageing and degradation, better physical and application properties, such as adherence to tissues, absorption capacity, required flexibility and dry and wet strengths, haemostasis time and absorption time. Microcrystalline and regenerated celluloses are very difficult to oxidize in polar medium, as they dissolve forming gel-like matter. On the contrary, using the procedure of this invention, these products can be prepared with convenient properties.

Perfluoro(poly)ether solvents are non-toxic, non-flammable, and in comparison with chlorinated and chlorofluorinated hydrocarbons they are environmentally friendly organic solvents. Their use for the cellulose oxidation makes it possible to oxidize natural cellulose materials, while preserving very good homogeneity of the product and so there is no need to be limited to regenerated cellulose only.

Another advantage of the use of perfluoro(poly)ether solvents consists in the fact that the oxidation runs substantially faster than in some other solvents mentioned above - such as in hydrofluoroether solvents. Experiments with segregated hydrofluoroethers of the formula C₄F₉-O-CH₃ with the boiling point of 61 °C and C₄F₉-O-C₂H₅ with the boiling point of 76 °C have shown that the cellulose oxidation in these solvents will run but not as well as in perfluoro(poly)ethers protected under this invention (see Table No. 1), which is probably caused by higher polarity of segregated hydrofluoroethers. The tests with segregated hydrofluoroethers confirm the uniqueness of perfluoro(poly)ethers as dinitrogen tetraoxide solvents for the cellulose oxidation.

### Example 1

### Oxidation of native wool knitted fabric

20 g of cotton fibre knitted fabric with 5 % of water content in the oxidation vessel was poured over with 200 ml of oxidation mixture composed of 90 vol-% of perfluoropolyether of the formula CF₃-[(O-CF(CF₃)-CF₂)ₘ-(O-CF₂)ₙ]-O-CF₃ (further ) with the boiling point of 90 °C and 10 vol-% of liquid N₂O₄. The oxidation ran at the laboratory temperature of 25 °C for 16 hours. After the oxidation was finished, the oxidation mixture was poured off and the knitted fabric was let to drain for 10 minutes. Then 200 ml of 70-% ethanol was added and the knitted fabric was allowed to extract for two hours. Washing with 70-% ethanol was carried out three times in total, then the product was washed with 96-% ethanol and finally with 99.8%.isopropanol. The knitted fabric was let to dry in free atmosphere. It yielded 22.30 g of the product containing 9.8 wt-% of water content; 18.8 wt-% of COOH in dry matter; DP 16.7 (by viscosimetry in cadoxen solution); pH of 1-% solution was 4; immersion rate 3 s and absorption capacity was 33.3 g of H₂O per 5 g of sample. The sample conformed to the adherence and identification tests. The knitted fabric showed very soft structure, very similar to the initial raw material.

### Example 2

### Comparison of oxidations in different solvents

Samples of 20 g of cotton fibre knitted fabric with 5 % of water content in oxidation vessels were each poured over with 200 ml of oxidation mixture composed of 90 vol-% of organic solvent and 10 vol-% of liquid N₂O₄. The oxidation ran at the laboratory temperature of 25 °C for 16 hours. After the oxidation was finished, the oxidation mixture was poured off and the samples were let to drain for 10 minutes. Then 200 ml of 70-% ethanol was added to each sample and the samples were allowed to extract for two hours. Washing with 70-% ethanol was carried out three times in total, then the product was washed with 96-% ethanol and finally with 99.8-% isopropanol. The samples were let to dry in free atmosphere for 8 hours. The experiment results are shown in Table No. 1:

**Table No. 1**

| Solvent | Boiling point *°C* | Identification | Adherence | W_{COOH} *wt-*% | DP - | Absorption capacity *g of H₂O*/*5 g of sample* |
|---|---|---|---|---|---|---|
| Perfluorocarbon | 80 | complies | complies | 18.0 | 22.8 | 42.8 |
| Hydrofluoroether | 61 | turbidity | complies | 10.9 | 78.5 | 45.0 |
| Hydrofluoroether | 76 | turbidity | complies | 10.6 | 82.3 | 48.1 |
| Perfluoropolyether | 55 | complies | complies | 17.4 | 28.1 | 40.8 |
| Perfluoropolyether | 70 | complies | complies | 18.8 | 11.7 | 36.3 |
| Perfluoropolyether | 84 | complies | complies | 18.7 | 25.2 | 35.9 |
| Perfluoropolyether | 90 | complies | complies | 18.8 | 16.7 | 33.3 |

### Example 3

### Oxidation of cotton wool and regenerated cellulose staple

Samples of 10 g of cotton wool or regenerated cellulose staple in oxidation vessels were each poured over with 200 ml of oxidation mixture composed of 90 vol-% of perfluoropolyether with the boiling point of 90 °C and 10 vol-% of liquid N₂O₄. The oxidation ran at the laboratory temperature of 25 °C for 16 hours. After the oxidation was finished, the oxidation mixture was poured off and the samples were let to drain for 10 minutes. Then 200 ml of 70-% ethanol was added to each sample and the samples were allowed to extract for two hours. Washing with 70-% ethanol was carried out three times in total, then the product was washed with 96-% ethanol and finally with 99.8-% isopropanol. The samples were let to dry in free atmosphere for 16 hours. The experiment results are shown in Table No. 2:

**Table No. 2:**

| Raw material | Loss on drying *wt-%* | Raw mater. DP | Identification | COOH *wt*-% | Product DP | Bioresorbability *days* |
|---|---|---|---|---|---|---|
| Cotton wool | 7 | 1 095 | complies | 19.0 | 16.4 | 24 |
| Viscostar | 5.7 | 214 | complies | 23.3 | 0.0 | 6 |
| Viscose | 7.6 | 242 | complies | 23.5 | 0.2 | 9 |
| Lyocell | 6.8 | 554 | complies | 23.1 | 0.0 | 6 |

| | | | | | | |
|---|---|---|---|---|---|---|
| All the products have soft fibrous structure and can be used e.g. as dental tampons. | | | | | | |

### Example 4

### Oxidation of microcrystalline cellulose

20 g of microcrystalline cellulose with the degree of polymerisation (DP) of 145 was added under constant stirring into the oxidation vessel containing 200 ml of oxidation mixture composed of 90 vol-% of perfluoropolyether with the boiling point of 90 °C and 10 vol-% of liquid N₂O₄. The oxidation ran at the laboratory temperature of 25 °C for 16 hours. After the oxidation was finished, the oxidation mixture was filtered off and the oxidized product was suspended in 200 ml of 70-% ethanol for 2 h, then ethanol was filtered off and washing was repeated. Washing with 70-% ethanol was carried out three times in total, then the product was washed with 96-% ethanol and finally with 99.8-% isopropanol. The product was let to dry in free atmosphere for 16 hours. The final product was a snow-white powder with the following parameters: content of COOH 16.6 wt-%; DP 2-7.6 (by viscosimetry in cadoxen solution); identification complying.

### Example 5

### Effect of the ratio of N₂O₄ weight to cellulose weight

Samples of native cotton knitted fabric (DP₀ = 2525) with the weight of 20 g were poured over with different volumes of oxidation mixture: 10 vol-% of N₂O₄ in perfluoropolyether with the boiling point of 90 °C. The oxidation ran at 20 °C for 23 h. After the oxidation was finished, the samples were washed with aqueous and anhydrous alcohol as in Example 1. Conditions and results of the experiment are shown in Table No. 3:

**Table No. 3 :**

| Experiment | V_{ox.of mixture} *ml* | V_{N2O4}/m_{cel} *ml*/*g* | m_{N2O4}/m_{cel} *g*/*g* | W_{COOH} *wt*-% | DP - |
|---|---|---|---|---|---|
| 1 | 100 | 0.5 | 0.725 | 10.5 | 68.4 |
| 2 | 156 | 0.78 | 1.13 | 12.6 | 58.0 |
| 3 | 200 | 1.0 | 1.45 | 14.7 | 43.7 |
| 4 | 400 | 2.0 | 2.90 | 18.1 | 18.8 |

### Example 6

### Evaluation of properties

The values of chemical, physical and application properties of a variety of native cellulose materials prepared by the procedures as per examples 2 and 3 in various solvents under the invention compared to the process in acid medium and to oxidized textile regenerated cellulose prepared by the well-known solvent process are summarised in Table No. 4. The evaluation of basic chemical properties of the oxidation product is carried out according to the methods specified in v U.S. Pharmacopoeia (USP 25 - Oxidized Cellulose). Further the polymerisation number (DP) is assessed using viscosimetry in cadoxen solution and pH value of 1-% aqueous extract of the sample using pH electrode. Physical characteristics (weight, absorption capacity and immersion rate) are determined by the product oxidation and finalization processes and these characteristics affect the final application possibilities of the material. The assessment of oxidized cellulose wet adherence to skin, assessment of stability under various conditions and eventually the assessment of haemostatic effect and biological absorbability are used to evaluate the material application properties.
Sample No. 1 - oxidized textile native cellulose as per Example 2, solvent perfluoropolyether with the boiling point of 70 °C
Sample No. 2 - oxidized textile native cellulose as per Example 2, solvent perfluoropolyether with the boiling point of 84 °C
Sample No. 3 - oxidized textile native cellulose as per Example 2, solvent perfluoropolyether with the boiling point of 90 °C
Sample No. 4 - oxidized textile native cellulose manufactured by oxidation in acid polar medium
Sample No. 5 - oxidized textile regenerated cellulose prepared by the well-known solvent process
Sample No. 6 - oxidized cotton wool as per Example 3, solvent perfluoropolyether with the boiling point of 90 °C

**Table No. 4:**

| Sample | Loss on drying *wt-*% | COOH *wt-%* | DP | Area weight *g*/*m²* | Absorpt ion capacity *g of H₂O*/*5 g of sample* | Immersi on rate *sec.* | Haemostasis time *min.* | Simulati on of bioresor bability in peptone *- days* | Absorbability *days* |
|---|---|---|---|---|---|---|---|---|---|
| 1 | 9.6 | 18.8 | 11.7 | 86.2 | 36.3 | 5 | 0.7 | 27 | 30 |
| 2 | 10.7 | 18.7 | 25.2 | 85.6 | 35.9 | 7 | 0.7 | 36 | 32 |
| 3 | 9.8 | 81.8 | 16.7 | 90.0 | 33.3 | 3 | 0.7 | 25 | 30 |
| 4 | 9.5 | 18.4 | 16.3 | 120.5 | 27.2 | 5 | 1.3 | 21 | 20 |
| 5 | 11.4 | 19.8 | 3.1 | 78.0 | 44.2 | 3 | 1.5 | 15 | 20 |
| 6 | 12.0 | 19.0 | 16.4 | - | 76.1 | - | 0.6 | 24 | 21 |

These experiments show that it is possible to oxidize the same initial material in organic solvent to similar level of carboxylic group content while achieving comparable chemical properties and similar degree of material degradation.

Area weight cannot be determined in case of sample no. 6 due to its non-textile nature.

All samples show satisfactory adherence to skin, wet material is flexible; it tends to adhere to skin and copy its surface. In contact of the textile oxidized cellulose samples with blood, immediate gelatination, quick coagulation and effective haemostasis occur in case of the samples prepared by the oxidation in perfluoropolyethers. All samples show good absorption in live tissues, quick healing; no suppuration or adverse response of the organism occurs.

## Claims

1. The method of preparation of bioresorbable cellulose material containing 5 to 24 wt% of carboxylic groups, with the degree of polymerisation between 3 and 100 using the oxidation of natural or regenerated cellulose by dinitrogen tetraoxide in the organic solvent medium, subsequent washing and drying, **characterised by** at least one perfluoroether and/or at least one perfluoropolyether of formula I are used as the organic solvent
R₁-(O-R₂)ₘ-(4-R₃)ₙ-O-R₄ I,
where R₁, R₂, _{R}3, R₄ represent monomers from the family of linear or branched perfluoroalkyls or perfluoroaryls, and
m, n ≥ 0,
with the boiling point of solvent between 50 and 110 °C, while the perfluoropolyether may be a homopolymer or a copolymer of two or more monomers mentioned and the main perfluoropolyether skeleton may be either linear or branched.

## Patentansprüche

1. Ein Verfahren zur Herstellung vom bioresorbierbaren Zellulosematerial mit Inhalt von 5 bis 24 Gw-% der Karbonsäuregruppen, mit dem Grad der Polymerisation zwischen 3 und 100, durch Anwendung der Oxidation von natürlicher oder regenerierter Zellulose durch Distickstofftetraoxid im Medium des organischen Lösungsmittels, mit anschließendem Waschen und Trocknen, **dadurch gekennzeichnet, dass** mindestens ein Perfluoräther und/oder mindestens ein Perfluorpolyäther der Formel I
R₁-(Q-R₂)ₘ-(O-R₃)ₙ-O-R₄ I
als organische Lösungsmittel angewendet werden, wo R₁, R₂, R₃, R₄ Monomere aus der Gruppe von linearen oder verzweigten Perfluoralkylen oder Perfluorarylen darstellen, und m, n ≥ 0 sind, mit dem Siedepunkt des Lösemittels zwischen 50 und 110°C, während das Perfluorpolyäther ein Homopolymer oder ein Kopolymer aus zwei oder mehreren der genannten Monomeren sein kann und das Hauptskelett des Perfluorpolyäthers entweder linear oder verzweigt sein kann.

## Revendications

1. Procédé de préparation d'une matiere cellulosique comprenant de 5 a 24 % en poids des groupes carboxyliques et le degré de polymérisation entre 3 et 100, a l'aide de l'oxidation de la cellulose naturelle ou régénérée par le dinitrogen tetraoxid dans un millieu des solvants organiques, suivi par lavage et séchage, **caractérisé en ce qu'**en tant que le solvant organique on utilise au moins un perfluoroéther et/ou au moins un perfluoropolyéther de la formule générale I
R₁-(O-R₂)ₘ-(O-R₃)ₙ-O-R₄ ,
ou R₁, R₂, R₃, R₄ représentent des monomeres du groupe des perfluoroalkyles ou perfluoroaryles linéaires ou ramifiés et
m, n ≥ 0,
avec la température d'ébullition du solvant comprise entre 50 et 110 °C, alors que le perfluoropolyéther pouvant etre le monomere ou copolymere de deux ou plusieurs desdits monomeres et le squlette principal des perfluoropolyéthers pouvant etre linéaire ou ramifié.
